# EUROPEAN PATENT SPECIFICATION

(11) **EP 1 994 599 B1**
(45) Date of publication and mention of the grant of the patent: **04.05.2016**
(21) Application number: 07708960.5
(22) Date of filing: 15.02.2007
(51) Int. Cl.: H01M 6/16, H01M 10/052, H01M 10/0567, H01M 4/131, H01M 4/36, H01M 4/62, H01M 10/0569

(54) **NON-AQUEOUS ELECTROLYTE AND ELECTROCHEMICAL DEVICE WITH IMPROVED SAFETY**
NICHTWÄSSRIGER ELEKTROLYT UND ELEKTROCHEMISCHE VORRICHTUNG MIT VERBESSERTER SICHERHEIT
ÉLECTROLYTE NON-AQUEUX ET DISPOSITIF ÉLECTROCHIMIQUE À SÉCURITÉ AMÉLIORÉE

(30) Priority: 15.02.2006 KR 20060014650
(43) Date of publication of application: 26.11.2008
(73) Proprietor: LG Chem, Ltd., Youngdungpo-gu, Seoul 150-721 (KR)
(72) Inventor: KIM, Young-Soo, Daejeon 305-380 (KR); AHN, Soon-Ho, Daejeon 305-720 (KR); HA, Soo-Hyun, Busan 611-820 (KR)
(74) Representative: Hoffmann Eitle
(86) International application number: PCT/KR2007/000810
(87) International publication number: WO 2007/094626

(56) References cited:
- EP-A1- 1 150 374
- EP-A1- 1 508 934
- EP-A1- 1 696 501
- EP-A2- 1 463 143
- WO-A1-98/15024
- US-A1- 2006 035 144
- US-A1- 2006 194 118
- US-B1- 6 743 947
- US-B1- 6 743 947
- MCMILLAN R ET AL: "Fluoroethylene carbonate electrolyte and its use in lithium ion batteries with graphite anodes" JOURNAL OF POWER SOURCES, ELSEVIER SA, CH LNKD- DOI:10.1016/S0378-7753(98)00201-8, vol. 81-82, 1 September 1999 (1999-09-01), pages 20-26, XP004363118 ISSN: 0378-7753
- SMART M C ET AL: "Improved performance of lithium-ion cells with the use of fluorinated carbonate-based electrolytes" JOURNAL OF POWER SOURCES, ELSEVIER SA, CH LNKD- DOI:10.1016/S0378-7753(03)00266-0, vol. 119-121, 1 June 2003 (2003-06-01), pages 359-367, XP004430195 ISSN: 0378-7753
- KANG XU ET AL: "Evaluation of Fluorinated Alkyl Phosphates as Flame Retardants in Electrolytes for Li-Ion Batteries II. Performance in Cell" JOURNAL OF THE ELECTROCHEMICAL SOCIETY, ELECTROCHEMICAL SOCIETY. MANCHESTER, NEW HAMPSHIRE, US LNKD- DOI:10.1149/1.1533041, vol. 150, no. 2, 1 January 2003 (2003-01-01), pages A170-A175, XP007906704 ISSN: 0013-4651

## Description

### Technical Field

The present invention relates to a non-aqueous electrolyte having improved safety and to an electrochemical device comprising the same.

### Background Art

Recently, as electronic instruments have become wireless and portable, non-aqueous electrolyte-based secondary batteries with high capacity and high energy density have been practically used as drive sources for the electronic instruments. A lithium secondary battery, which is a typical example of the non-aqueous secondary batteries, comprises a cathode, an anode and an electrolyte and is chargeable and dischargeable because lithium ions coming out from a cathode active material during a charge process are intercalated into an anode active material and deintercalated during a discharge process, so that the lithium ions run between both the electrodes while serving to transfer energy. Such a high-capacity lithium secondary battery has an advantage in that it can be used for a long period of time due to high energy density. However, the lithium secondary battery has problems in that when the battery is exposed to high temperatures for a long period of time due to internal heat generation during the driving thereof, the stable structure of the battery, comprising a cathode(ex. lithium transition metal oxide), an anode (ex. crystalline or non-crystalline carbon) and a separator, will be changed due to gas generation caused by the oxidation of the electrolyte to deteriorate the performance of the battery or, in severe cases, to cause the ignition and explosion of the battery due to internal short circuits in severe cases.

To solve such problems, there have been many recent attempts to improve the high-temperature safety of the battery by (1) using a porous polyolefin-based separator having a high melting point, which does not easily melt in the internal/external thermal environments or (2) adding a non-flammable organic solvent to a non-aqueous electrolyte comprising a lithium salt and a flammable organic solvent.

However, the polyolefin-based separator has a disadvantage in that it should generally have high film thickness in order to achieve high-melting point and to prevent internal short circuits. This high film thickness relatively reduces the loading amount of the cathode and the anode, thus making it impossible to realize a high capacity of the battery, or deteriorating the performance of the battery in severe cases. Also, the polyolefin-based separator consists of a polymer such as PE or PP, which has a melting point of about 150 °C, and thus, when the battery is exposed to high temperatures above 150 °C for a long period of time, the separator will melt, causing short circuits inside the battery, thus causing the ignition and explosion of the battery.

Meanwhile, a lithium secondary battery comprising a flammable non-aqueous electrolyte containing a lithium salt, cyclic carbonate and linear carbonate has the following problems at high temperatures: (1) a large amount of heat is generated due to the reaction between lithium transition metal oxide and the carbonate solvent to cause the short circuit and ignition of the battery, and (2) a thermally stable battery cannot be realized due to the flammability of the non-aqueous electrolyte itself.

Recently, efforts to solve the problems associated with the flammability of the electrolyte by adding a phosphorus (P)-based compound having flame retardancy have been made, but the compound causes a problem of accelerating irreversible reactions, including Li corrosion, in a battery, thus significantly reducing the performance and efficiency of the battery.

EP-A-1 508 934 discloses an electrolyte for a rechargeable lithium battery which comprises a lithium salt and a non-aqueous organic solvent comprising a cyclic ester and a mono-nitrile. The electrolyte may further comprise an additive such as fluoroethylene carbonate.

EP-A-1 463 143 discloses an electrolyte for a lithium secondary battery which comprises lithium salts, a high boiling point organic solvent such as ethylene carbonate, and a halogenated carbonate-based additive such fluoroethylene carbonate.

WO-A-98/15024 discloses an electrolyte for a secondary alkali metal-ion cell comprising a solution of fluoroethylene carbonate, an alkali metal salt dissolved therein and propylene carbonate.

J. Power Sources 119-121, 359 (2003) and J. Power Sources 81-82, 20 (1999) both teach the addition of fluorinated carbonates to electrolytes for use in a lithium-ion cell.

### Disclosure of the Invention

The present inventors have found that when both a fluoroethylene carbonate (FEC) compound and an aliphatic mono-nitrile compound are used as electrolyte additive, these compounds show a synergic effect in terms of the performance of a battery, as well as in terms of the safety of the battery, for example in terms of the prevention of battery ignition at over-charged state and/or the prevention of ignition/explosion caused by internal short circuit of a battery at high temperatures above 150°C. The present invention is based on this finding.

According to a first aspect, the present invention provides a non-aqueous electrolyte comprising:
a lithium salt,
a solvent including either or both of at least one cyclic ester selected from ethylene carbonate, propylene carbonate and gamma-butyrolactone, and at least one linear carbonate selected from diethyl carbonate, dimethyl carbonate, ethyl methyl carbonate and methyl propyl carbonate, and
as additives, 1-5 wt%, based on the weight of the electrolyte, of fluoroethylene carbonate or its decomposition product, and 1-10 wt%, based on the weight of the electrolyte, of an aliphatic mono-nitrile compound selected from butyronitrile, valeronitrile, propionitrile and a mixture thereof.

According to a second aspect, the present invention provides an electrochemical device comprising a cathode having a complex formed between a surface of a cathode active material and an aliphatic mono-nitrile compound selected from butyronitrile, valeronitrile, propionitrile and a mixture thereof; and a non-aqueous electrolyte containing 1-5 wt%, based on the weight of the electrolyte, of fluoroethylene carbonate or its decomposition product, and 1-10 wt%, based on the weight of the electrolyte, of an aliphatic mono-nitrile compound selected from butyronitrile, valeronitrile, propionitrile and a mixture thereof.

In the present invention, the aliphatic mono-nitrile compound is preferably butyronitrile or valeronitrile.

Moreover, in the present invention, the decomposition product of fluoroethylene carbonate has an opened-ring structure.

### Brief Description of the Drawings

FIG. 1 is a graphic diagram showing the test results for battery performance after each battery obtained from Examples 1 and 2 and Comparative Examples 1 and 5 was stored at a high temperature of 80°C for 10 days.
FIGS. 2 to 4 are graphic diagrams showing whether the ignition and explosion of batteries occur after the batteries are stored in an oven at 150°C in a state in which the batteries are charged to 4.2V. Herein, FIG. 2 is for Example 1, FIG. 3 for Comparative Example 1, FIG. 4 for Comparative Example 2.
FIG. 5 is a graphic diagram showing the results of heat generation analysis conducted using differential scanning calorimetry (DSC) in order to examine the thermal safety of each of the batteries manufactured in Examples 1, 4 and 5 and Comparative Example 5.

### Mode for Carrying Out the Invention

Hereinafter, the present invention will be described in detail.

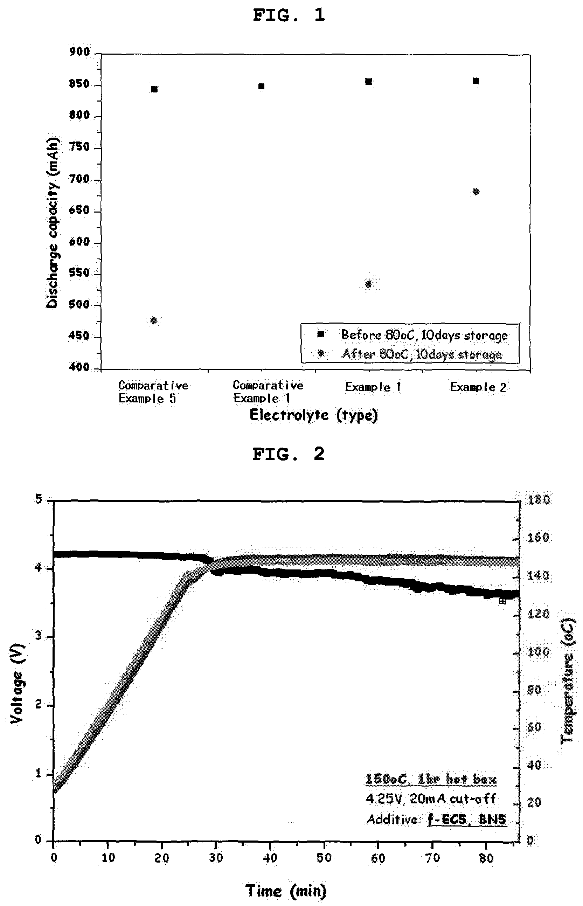

The present inventors have found through experiments that fluoroethylene carbonate and an aliphatic mono-nitrile compound having a cyano (-CN) functional group show a synergic effect in terms of securing battery safety associated with thermal shock and in terms of high-temperature cycle life (see FIGS. 1 to 4).

When fluoroethylene carbonate or its decomposition product and the aliphatic mono-nitrile compound are used in combination as additive, they can show a synergic effect in terms of the safety of a battery, and the mechanism thereof is as follows.

The ignition and explosion reactions of a lithium ion battery can occur due to a rapid exothermic reaction between a charged cathode and an electrolyte, and if the capacity of the battery increases, only controlling the exothermic reaction between the cathode and the electrolyte cannot secure the safety of the battery.

Generally, when the charge voltage of the cathode is high or the capacity of the battery is increased (an increase in the number of stacks (pouch type batteries, etc.) or the number of electrode windings of jelly-rolls (cylindrical or prismatic batteries, etc.)), the energy level of the battery will be increased, and thus the battery will tend to generate heat due to physical shock (e.g., heat, temperature, pressure, etc.), or in severe cases, explode, thus reducing the safety of the battery.

Fluoroethylene carbonate can prevent or delay the battery from being ignited by the exothermic reaction, compared to ethylene carbonate. This is because fluoroethylene carbonate has a high flame-retardant effect, and in particular, the compound can form an SEI layer (protective layer) on the anode surface upon charge to delay micro- or macro-thermal short circuits occurring inside the battery.

However, fluoroethylene carbonate is so thermally fragile to be easily decomposed at high temperature and to generate a large amount of gas. The generated gas can vent a pouch-typed or can-typed battery case, thereby accelerating the combustion of the electrolyte and causing internal short circuits, particularly due to the exothermic reaction between the electrolyte and the oxygen introduced from the vented region, resulting in the ignition and explosion of the battery.

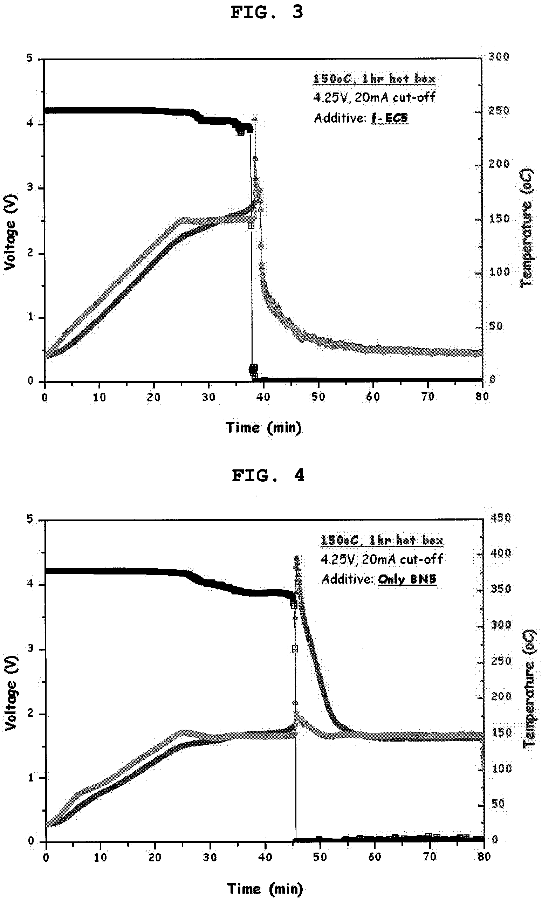

That is, when fluoroethylene carbonate or its decomposition product is used alone, the safety of the battery, particularly the high-temperature safety of the battery, cannot be sufficiently secured (see FIG. 3). Accordingly, the present invention is characterized in that the aliphatic mono-nitrile compound is used in combination with fluoroethylene carbonate or its decomposition product.

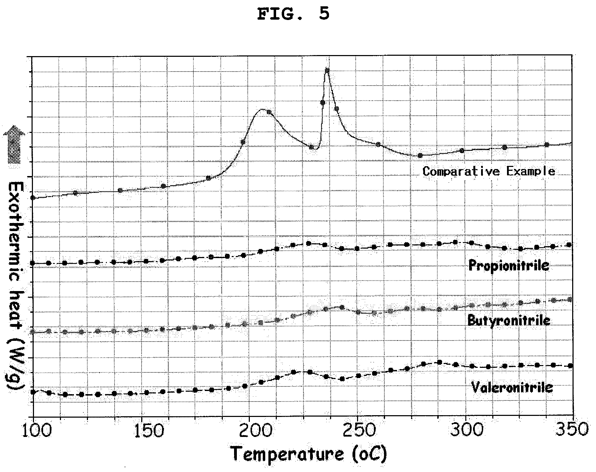

When the aliphatic mono-nitrile compound is used in combination with fluoroethylene carbonate or its decomposition product, the aliphatic mono-nitrile compound can form a complex on the surface of a cathode consisting of lithium-transition metal oxide so as to inhibit the reaction between the electrolyte (ex. linear carbonates or cyclic carbonates) and the cathode, thus controlling heat generation and controlling an increase in the temperature of the battery. Also, the complex formation can prevent the combustion of the electrolyte, which is accelerated by oxygen liberated due to the structural collapse of the cathode, prevent thermal runaway phenomena, and prevent the internal short circuit of the battery from occurring due to heat generation (see FIG. 5).

Also, the continuous interaction chemically between fluoroethylene carbonate and the cyano (-CN) functional group of the aliphatic mono-nitrile compound prevents a large amount of gas generation occurred when using fluoroethylene carbonate alone.

In short, 1) fluoroethylene carbonate or its decomposition product and 2) an aliphatic mono-nitrile compound such as butyronitrile or valeronitrile can show a synergic effect, thus improving the safety of the battery.

Furthermore, when fluoroethylene carbonate or its decomposition product and the aliphatic mono-nitrile compound are used in combination, they can show a synergic effect in terms of the performance of a battery, and the mechanism thereof is as follows.

Fluoroethylene carbonate or its decomposition product forms a dense and close passivation layer on the anode upon the initial charge cycle (which is generally referred as formation of a battery). The passivation layer prevents co-intercalation of the carbonate solvent into the layered structure of active materials and decomposition of the carbonate solvent, and thus reduces irreversible reactions in the battery. Additionally, the passivation layer allows only Li⁺ to be intercalated/deintercalated through the layer, thereby improving the life characteristics of the battery.

However, the passivation layer (SEI layer) formed by the compound is easily decomposed at high temperature (above 60°C) to generate a large amount of gas (CO₂ and CO), and particularly in the case of a cylindrical battery, the generated gas breaks a current interruptive device (CID), an electrochemical device at a cylindrical cap region, to interrupt electric current, thus reducing the function of the battery. In severe cases, the generated gas opens the cap region, so that the electrolyte leaks to corrode the appearance of the battery or to cause a significant reduction in the performance of the battery.

According to the present invention, gas generation resulting from fluoroethylene carbonate or its decomposition product can be inhibited through the use of the aliphatic mono-nitrile compound by the chemical interaction between fluoroethylene carbonate or its decomposition and a cyano (-CN) functional group, thus improving the high-temperature cycle life characteristics of the battery (see Fig. 1).

When considering this effect together with an improvement in the performance of a high-capacity battery, butyronitrile or valeronitrile is most suitable as the aliphatic mono-nitrile.

Among aliphatic mono-nitrile compounds, those having long chain length have no great effect on the performance and safety of the battery or adversely affect the performance of the battery, and thus those having short chain length are preferable. However, acetonitrile having an excessively short chain length causes side reactions in the battery. Thus the aliphatic mono-nitrile compound is selected from propionitrile (Formula 3), butyronitrile (Formula 4), valeronitrile (Formula 5) and a mixture thereof. Among them, it is preferable to select butyronitrile or valeronitrile. Most preferred is butyronitrile.

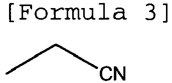

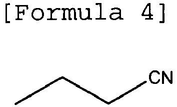

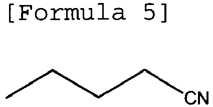

Meanwhile, among compounds containing a cyano functional group, aromatic nitriles and fluorinated aromatic nitrile compounds are not preferable because they are electrochemically easily decomposed in the battery to interfere with the migration of Li ions, thus deteriorating the performance of the battery.

The content of fluoroethylene carbonate or its decomposition product for use in the inventive electrolyte is 1-5 wt%, and most preferably 1-3 wt%. Fluoroethylene carbonate has a high viscosity, and thus when it is used in an excessive amount, the ion conductivity of the electrolyte can be reduced and the mobility of Li ion can be inhibited, causing to a reduction of the cycle life and capacity of battery.

The aliphatic mono-nitrile compounds, particularly butyronitrile and valeronitrile, have the effects of increasing the ion conductivity of the electrolyte and reducing the viscosity of the electrolyte, and for this reason, the content of the aliphatic mono-nitrile compound in the electrolyte is 1-10 wt%.

The inventive electrolyte may contain as an additive an aliphatic di-nitrile compound having two cyano (-CN) functional groups such as CN-R-CN, wherein R is aliphatic hydrocarbon etc.), preferably succinonitrile. The content of the aliphatic di-nitrile compound, particularly succinonitrile is preferably 1-10 wt%, more preferably 1-5 wt%, and most preferably 1-3 wt%.

The inventive non-aqueous electrolyte for a lithium secondary battery contains a general non-aqueous organic solvent including either or both of at least one cyclic ester selected from ethylene carbonate, propylene carbonate and gamma-butyrolactone, and at least one linear carbonate selected from diethyl carbonate, dimethyl carbonate, ethyl methyl carbonate and methyl propyl carbonate.

The non-aqueous electrolyte contains a lithium salt, non-limiting examples of which include LiClO₄, LiCF₃SO₃, LiPF₆, LiBF₄, LiAsF₆, LiSbF₆, LiN(CF₃SO₂)₂, LiN(C₂F₅SO₂)₂, LiAlO₄, LiAlCl₄, LiSO₃CF₃, and LiN(CₓF₂ₓ₊₁SO₂) (C_{y}F_{2y+1}SO₂) (x and y = natural numbers).

Meanwhile, the aliphatic mono-nitrile compounds can form a bond with a transition metal, such as cobalt, contained in the cathode active material through their cyano functional groups having high dipole moment. Particularly, the cyano functional groups can form stronger bonds with the surface of the cathode at high temperature, thereby forming a complex structure.

In order to simplify a manufacturing process of a battery, it is preferable that the aliphatic mono-nitrile compound is introduced into an electrolyte, and then a complex is formed between the surface of a cathode active material and the aliphatic mono-nitrile compound. However, it is also possible to separately prepare a cathode having a complex formed on the surface thereof, before the assemblage of a battery.

Preferably, the complex between the surface of a cathode active material and the aliphatic mono-nitrile compound is formed by dipping a cathode, comprising a cathode active material coated on a collector, into an electrolyte containing the aliphatic mono-nitrile compound added thereto, followed by heat treatment at high temperature. The high-temperature heat treatment may be performed in such a temperature range as not to affect electrode active materials and a binder, generally at a temperature of 180°C or lower. Otherwise, although the high-temperature heat treatment depends on the kind of the aliphatic mono-nitrile compound, it may be performed at such a temperature range as to prevent excessive evaporation of the aliphatic mono-nitrile compound, generally at a temperature of 100°C or lower. In general, the high-temperature treatment is suitably performed at a temperature between 60°C and 90°C. Long-term treatment at a temperature between 30°C and 40°C may provide the same effect.

In addition, in the present invention, a compound capable of forming a passivation layer on the surface of an anode may additionally be used to prevent side reactions where a passivation layer formed on the anode from fluoroethylene carbonate, emits a large amount of gas at high temperature. Non-limiting examples of the compound include alkylene compounds, such as vinylene carbonate (VC), sulfur-containing compounds, such as propane sulfone, ethylene sulfite and 1,3-propane sultone, and lactam-based compounds, such as N-acetyl lactam.

Furthermore, the electrolyte according to the present invention may comprise vinylene carbonate, propane sulfone and ethylene sulfite at the same time, but only a sulfur-containing compound may also be selectively added to the electrolyte to improve the high-temperature cycle life characteristics of the battery.

A typical example of electrochemical devices, which can be manufactured according to the present invention, is a lithium secondary battery, which may comprise: (1) a cathode capable of intercalating and deintercalating lithium ions; (2) an anode capable of intercalating and deintercalating lithium ions; (3) a porous separator; and (4) a) a lithium salt, and b) an electrolyte solvent.

In general, as a cathode active material for use in a lithium secondary battery, lithium-containing transition metal oxides may be used. The cathode active material can be at least one material selected from the group consisting of LiCoO₂, LiNiO₂, LiMn₂O₄, LiMnO₂, and LiNi₁₋ₓCoₓM_{y}O₂ (wherein 0≤ X ≤1, 0≤ Y ≤1, 0≤ X+Y ≤1, M is a metal such as Mg, Al, Sr or La). Meanwhile, as an anode active material for use a lithium secondary battery, carbon, lithium metal or lithium alloy may be used. In addition, other metal oxides capable of lithium intercalation/deintercalation and having an electric potential of less than 2V based on lithium (for example, TiO₂ and SnO₂) may be used as the anode active material.

The lithium secondary battery according to the present invention may have a cylindrical, prismatic or pouch-like shape.

Hereinafter, the present invention will be described in further detail with reference to examples. It is to be understood, however, that these examples are illustrative only and the present invention is not limited thereto.

### Examples

### Example 1

An electrolyte used in this Example was a 1M LiPF₆ solution having a composition of EC: EMC = 1: 2. To the electrolyte, 5 wt% of fluoroethylene carbonate and 5 wt % of butyronitrile were added. Artificial graphite and LiCoO₂ were used as an anode active material and a cathode active material, respectively. Then, a 3562 size of lithium polymer battery was manufactured according to a conventional method and aluminum laminate was used as the battery package.

### Example 2

A lithium polymer battery was manufactured in the same manner as in Example 1, except that 10 wt% of butyronitrile was used instead of 5 wt% of butyronitrile.

### Example 3

A lithium polymer battery was manufactured in the same manner as in Example 1, except that 1 wt% of fluoroethylene carbonate and 5 wt % of butyronitrile were added.

### Example 4

A lithium polymer battery was manufactured in the same manner as in Example 1, except that valeronitrile was used instead of butyronitrile.

### Example 5

A lithium polymer battery was manufactured in the same manner as in Example 1, except that propionitrile was used instead of butyronitrile.

### Comparative Example 1

A lithium polymer battery was manufactured in the same manner as in Example 1, except that 5 wt% of fluoroethylene carbonate was added and butyronitrile was not added.

### Comparative Example 2

A lithium polymer battery was manufactured in the same manner as in Example 1, except that 5 wt% of butyronitrile was added and fluoroethylene carbonate was not added.

### Comparative Example 3

A lithium polymer battery was manufactured in the same manner as in Comparative Example 2, except that 10 wt% of butyronitrile was used instead of 5 wt% of butyronitrile.

### Comparative Example 4

A lithium polymer battery was manufactured in the same manner as in Comparative Example 3, except that valeronitrile was used instead of butyronitrile.

### Comparative Example 5

A lithium polymer battery was manufactured in the same manner as in Comparative Example 1, except that fluoroethylene carbonate was not added.

### <Experiment>

### 1. Test for battery performance

Each battery obtained from Examples 1 and 2 and Comparative Examples 1 and 5 was stored at a high temperature of 80°C for 10 days and tested for battery performance. The test results are shown in FIG. 1. Examples 1 and 2 comprising the non-aqueous electrolyte containing fluoroethylene carbonate and butyronitrile added thereto according to the present invention, showed excellent capacity restorability and battery performance even after a high-temperature storage.

In the case of Comparative Example 1 comprising the non-aqueous electrolyte containing fluoroethylene carbonate added thereto without butyronitrile, a large amount of gas was generated during a high-temperature storage, thereby venting a battery case, causing to exposure of the electrolyte.

### 2. Test for Safety (1)

Each of the batteries manufactured in Example 1 and Comparative Examples 1 and 2 was charged to 4.25V and stored in an oven at 150 °, and then whether the ignition and explosion of the batteries occurred was observed. The observation results are shown in FIGS. 2 to 4.

As can be seen in FIG. 2, only the case of the battery containing 5 wt% of fluoroethylene carbonate (FEC) and 5 wt% of the butyronitrile compound added to the electrolyte solvent realized a thermally stable battery at high temperature for 1 hour or longer without ignition.

On the other hand, in the case of adding fluoroethylene carbonate alone (FIG. 3) or the case of adding only butyronitrile or valeronitrile (FIG. 4), it could be seen that the battery was ignited and exploded at a high temperature above 150 °C.

### 3. Test for Safety (2)

Each of the batteries manufactured in Examples 1, 4 and 5 and Comparative Example 5 was charged to 4.2V. A general thermogravimetric analyzer, DSC (Differential Scanning Calorimeter), was used, wherein two highpressure pans capable of resisting the vapor pressure of the electrolyte were used as pans for measurement. To one pan, about 5-10 mg of the cathode sample separated from each of the batteries charged to 4.2V was introduced, while the other pan was left empty. The calorific difference between the two pans was analyzed while the pans were heated at a rate of 5 °C/min to 400 °C to measure temperature peaks corresponding to heat generation.

As shown in FIG. 5, the battery manufactured without the aliphatic mono-nitrile compound shows heat generation peaks at about 200 °C and about 240 °C. Generally, the peak at about 200 °C indicates heat generation caused by the reaction between the electrolyte and the cathode, while the peak at about 240 °C indicates heat generation caused by combined factors including the reaction between the electrolyte and the cathode, and the structural collapse of the cathode. The battery comprising the non-aqueous electrolyte containing butyronitrile or valeronitrile added thereto showed a remarkable reduction in heat generation without showing the above two temperature peaks. This indicates that heat generation caused by the reaction between the electrolyte and the cathode was controlled due to the formation of a protective layer through a strong bond between butyronitrile or valeronitrile and the cathode surface.

### Industrial Applicability

As can be seen from the foregoing, according to the present invention, fluoroethylene carbonate and the aliphatic mono-nitrile compound are used in combination, they can show a synergic effect in terms of securing safety at a high temperature, and in terms of improving the battery performance by maintaining a high capacity and efficiency.

## Claims

1. A non-aqueous electrolyte comprising:
a lithium salt,
a solvent including either or both of at least one cyclic ester selected from ethylene carbonate, propylene carbonate and gamma-butyrolactone, and at least one linear carbonate selected from diethyl carbonate, dimethyl carbonate, ethyl methyl carbonate and methyl propyl carbonate, and
as additives, 1-5 wt%, based on the weight of the electrolyte, of fluoroethylene carbonate or its decomposition product, and 1-10 wt%, based on the weight of the electrolyte, of an aliphatic mono-nitrile compound selected from butyronitrile, valeronitrile, propionitrile and a mixture thereof.

2. A non-aqueous electrolyte according to Claim 1, wherein the electrolyte further comprises an aliphatic dinitrile compound.

3. A non-aqueous electrolyte according to Claim 1, wherein the electrolyte further comprises a compound selected from alkylene compounds, sulfur-containing compounds and lactam-based compounds, which can form a passivation layer on an anode surface.

4. An electrochemical device comprising a cathode, an anode, and a non-aqueous electrolyte as defined in any of Claims 1 to 3.

5. An electrochemical device comprising a cathode having a complex formed between a surface of a cathode active material and an aliphatic mono-nitrile compound selected from butyronitrile, valeronitrile, propionitrile and a mixture thereof; and a non-aqueous electrolyte containing 1-5 wt%, based on the weight of the electrolyte, of fluoroethylene carbonate or its decomposition product, and 1-10 wt%, based on the weight of the electrolyte, of an aliphatic mono-nitrile compound selected from butyronitrile, valeronitrile, propionitrile and a mixture thereof.

## Patentansprüche

1. Nicht-wässriger Elektrolyt, umfassend:
ein Lithiumsalz,
ein Lösungsmittel, das eines oder beide von zumindest einem cyclischen Ester, ausgewählt aus Ethylencarbonat, Propylencarbonat und gamma-Butyrolacton, und zumindest einem geradkettigen Carbonat, ausgewählt aus Diethylcarbonat, Dimethylcarbonat, Ethylmethylcarbonat und Methylpropylcarbonat, einschließt, und
als Additive 1 bis 5 Gew.%, basierend auf dem Gewicht des Elektrolyten, Fluorethylencarbonat oder sein Zersetzungsprodukt und 1 bis 10 Gew.%, basierend auf dem Gewicht des Elektrolyten, einer aliphatischen Mononitrilverbindung, ausgewählt aus Butyronitril, Valeronitril, Propionitril und einer Mischung davon.

2. Nicht-wässriger Elektrolyt gemäß Anspruch 1, worin der Elektrolyt ferner eine aliphatische Dinitrilverbindung umfasst.

3. Nicht-wässriger Elektrolyt gemäß Anspruch 1, worin der Elektrolyt ferner eine Verbindung, ausgewählt aus Alkylenverbindungen, Schwefel enthaltenden Verbindungen und Lactam-basierten Verbindungen, umfasst, die eine Passivierungsschicht auf einer Anodenoberfläche bilden kann.

4. Elektrochemische Vorrichtung, umfassend eine Kathode, eine Anode und einen nicht-wässrigen Elektrolyten wie in einem beliebigen der Ansprüche 1 bis 3 definiert.

5. Elektrochemische Vorrichtung, umfassend eine Kathode, die einen Komplex aufweist, der zwischen einer Oberfläche eines Kathoden-Aktivmaterials und einer aliphatischen Mononitrilverbindung, ausgewählt aus Butyronitril, Valeronitril, Propionitril und einer Mischung davon, gebildet ist; und einen nicht-wässrigen Elektrolyten, der 1 bis 5 Gew.%, basierend auf dem Gewicht des Elektrolyten, Fluorethylencarbonat oder sein Zersetzungsprodukt, und 1 bis 10 Gew.%, basierend auf dem Gewicht des Elektrolyten, einer aliphatischen Mononitrilverbindung, ausgewählt aus Butyronitril, Valeronitril, Propionitril und einer Mischung davon, enthält.

## Revendications

1. Electrolyte non aqueux comprenant :
un sel de lithium,
un solvant comprenant l'un et/ou l'autre d'au moins un ester cyclique choisi parmi le carbonate d'éthylène, le carbonate de propylène et la gamma-butyrolactone et au moins un carbonate linéaire choisi parmi le carbonate de diéthyle, le carbonate de diméthyle, le carbonate d'éthyle et de méthyle et le carbonate de méthyle et de propyle, et,
en tant qu'additifs, 1 à 5 % en poids, en se basant sur le poids de l'électrolyte, de carbonate de fluoroéthylène ou de son produit de décomposition et 1 à 10 % en poids, en se basant sur le poids de l'électrolyte, d'un composé mononitrile aliphatique choisi parmi le butyronitrile, le valéronitrile, le propionitrile et l'un de leurs mélanges.

2. Electrolyte non aqueux selon la revendication 1, dans lequel l'électrolyte comprend en outre un composé dinitrile aliphatique.

3. Electrolyte non aqueux selon la revendication 1, dans lequel l'électrolyte comprend en outre un composé choisi parmi les composés alkylène, les composés contenant du soufre et les composés à base de lactames, qui peuvent former une couche de passivation sur la surface d'une anode.

4. Dispositif électrochimique comprenant une cathode, une anode et un électrolyte non aqueux tel que défini dans l'une quelconque des revendications 1 à 3.

5. Dispositif électrochimique comprenant une cathode comportant un complexe formé entre la surface d'un matériau cathodique actif et un composé mononitrile aliphatique choisi parmi le butyronitrile, le valéronitrile, le propionitrile et l'un de leurs mélanges ; et un électrolyte non aqueux contenant 1 à 5 % en poids, en se basant sur le poids de l'électrolyte, de carbonate de fluoroéthylène ou de son produit de décomposition, et 1 à 10 % en poids, en se basant sur le poids de l'électrolyte, d'un composé mononitrile aliphatique choisi parmi le butyronitrile, le valéronitrile, le propionitrile et l'un de leurs mélanges.
